# EUROPEAN PATENT APPLICATION

(11) **EP 4 376 272 A1**
(43) Date of publication of application: **29.05.2024**
(21) Application number: 23825188.8
(22) Date of filing: 25.07.2023
(51) Int. Cl.: H02K 7/14, H02K 1/12, H02K 3/46, F04D 25/06, F04D 29/38

(54) **BRUSHLESS MOTOR OF HIGH-SPEED HAIR DRYER**

(30) Priority: 17.08.2022 CN 202210984939
(71) Applicant: Kerui Technology (Dongguan) Co., Ltd., Dongguan, Guangdong 523000 (CN)
(72) Inventor: WANG, Zhu, Shenzhen, Guangdong 518000 (CN); HUANG, Mingqing, Yongzhou, Hunan 425000 (CN); YUAN, Chengrong, Baoshan, Yunnan 678000 (CN)
(74) Representative: Chung, Hoi Kan
(86) International application number: PCT/CN2023/109011
(87) International publication number: WO 2024/037294

(57) **Abstract**

A brushless motor for a high-speed air dryer, comprising a motor, an air channel and a fan, the motor is vertically provided, the air channel is vertically sleeved over an upper end of the motor, a top portion of the motor penetrates a top portion of the air channel, the fan is sleeved over the top portion of the air channel and a bottom portion of the fan is connected with the top portion of the motor; an installation groove is formed vertically in an intermediate portion of the air channel, at least one air guiding piece is formed circumferentially and at even intervals at an inner surface of the air channel, a side of the at least one air guiding piece is connected with the inner surface of the air channel, another side of the at least one air guiding piece is connected with the outer surface of the installation groove, the at least one air guiding piece is formed to be arc-shaped, and the at least one air guiding piece extends from the top portion of the outer surface of the installation groove to a bottom portion of the outer surface of the installation groove; at least one fan blade is formed at an outer surface of the fan circumferentially and at even intervals, the at least one fan blade is formed to be arc-shaped, the at least one fan blade extends from a top portion of the outer surface of the fan to the bottom portion of the fan, and thicknesses at both ends of the at least one fan blade is thinner than a thickness of the at least one fan blade at an intermediate portion.

## Description

### Technical field

The present invention relates specifically to a brushless motor for a high-speed hair dryer.

### Background technology

With the development of the society and improvement of living standards, demands on the quality of life are increasingly high, high-speed hair dryers are accessories that are used in daily lives, and ever-increasing standards are placed on the quality of high-speed hair dryers.

Currently there are a variety of commercially available high-speed hair dryers, however, some common quality problems were observed, for example, they have large sizes, slow wind speed, low air flow, noisy, poor stability, short service life and poor consistency and stableness.

### Summary of the invention

To overcome the foregoing deficiency, the present invention aims to provide a technical solution to solve the foregoing problems.
A brushless motor for a high-speed hair dryer, comprising a motor, an air channel and a fan, the motor is vertically provided, the air channel is vertically sleeved over an upper end of the motor, a top portion of the motor penetrates a top portion of the air channel, the fan is sleeved over the top portion of the air channel and a bottom portion of the fan is connected with the top portion of the motor;
An installation groove is formed vertically in an intermediate portion of the air channel, a top portion of an outer surface of the installation groove is curved, at least one air guiding piece is formed circumferentially and at even intervals at an inner surface of the air channel, a side of the at least one air guiding piece is connected with the inner surface of the air channel, another side of the at least one air guiding piece is connected with the outer surface of the installation groove, the at least one air guiding piece is formed to be arc-shaped, and the at least one air guiding piece extends from the top portion of the outer surface of the installation groove to a bottom portion of the outer surface of the installation groove;

At least one fan blade is formed at an outer surface of the fan circumferentially and at even intervals, the at least one fan blade is formed to be arc-shaped, the at least one fan blade extends from a top portion of the outer surface of the fan to the bottom portion of the fan, and thicknesses at both ends of the at least one fan blade are thinner than a thickness of the at least one fan blade at an intermediate portion. Preferably, a boss is formed at the top portion of the installation groove, a through-hole is formed vertically in an intermediate portion of the boss, the through-hole extends through a top portion of the boss and the bottom portion of the installation groove, and the motor is sleeved inside the installation groove.

Preferably, the fan is sleeved over the boss and is rotatably connected with the boss.

Preferably, the motor is formed by a stator, a rotor, at least one coil and a rotation shaft;
At least one coil holder is provided circumferentially and at even intervals at an inner surface of the stator and the rotation shaft is vertically sleeved over an intermediate portion of the rotor and is connected with the rotor.

Preferably, a top portion of the rotation shaft is connected with the bottom portion of the fan.

Compared with the prior art, the beneficial effects of the present invention are: with the brushless motor for high-speed hair dryer provided in the present invention, the problems listed in the background technology have been addressed, the key indicator of air flow rate of the air dryer is increased, the air flow speed is raised, the noise is systematically reduced, the stability is enhanced and the service life is prolonged. Consequently, consistency of the motor in noise, rotation rate and yield is significantly improved.

The other aspects and advantages of the present invention will be set forth in the following description and some of them will become apparent in the following description or can be known from the embodiments of the present invention.

### Brief description of drawings

To illustrate the technical solutions of the embodiments of the present invention or the prior art, hereinafter a simple introduction will be given to the drawings to be used in the description of the embodiments or the prior art, obviously, the drawings given in the description show only some embodiments of the present invention, for those of ordinary skill in the art, without paying creative effort, it is possible to obtain other embodiments based on the drawings provided here.
Figure 1 is a structural schematic diagram showing the present invention;
Figure 2 is a cross-sectional schematic diagram showing the present invention;
Figure 3 is a structural schematic diagram showing an air channel of the present invention;
Figure 4 is a structural schematic diagram showing an air guiding piece in the present invention;
Figure 5 is a structural schematic diagram showing a fan in the present invention;
And in the drawings, 1 motor; 2 air channel; 3 fan; 4 installation groove; 5 air guiding piece; 6 fan blade; 7 boss; 8 through-hole; 9 stator; 10 rotor; 11 coil; and 12 rotation shaft.

### Embodiments

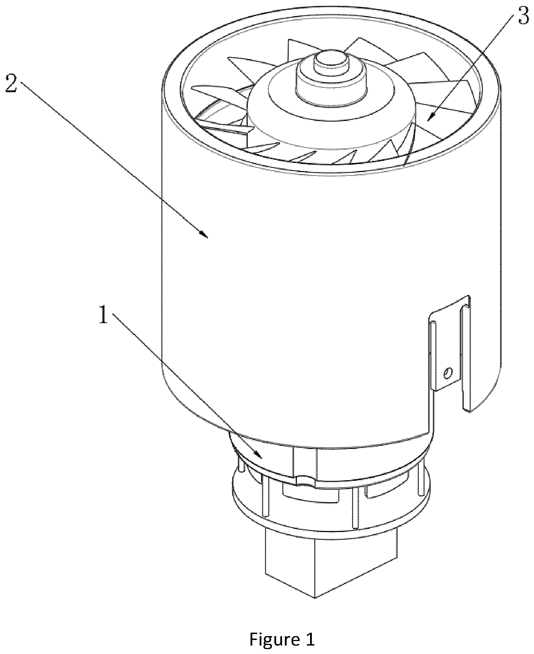

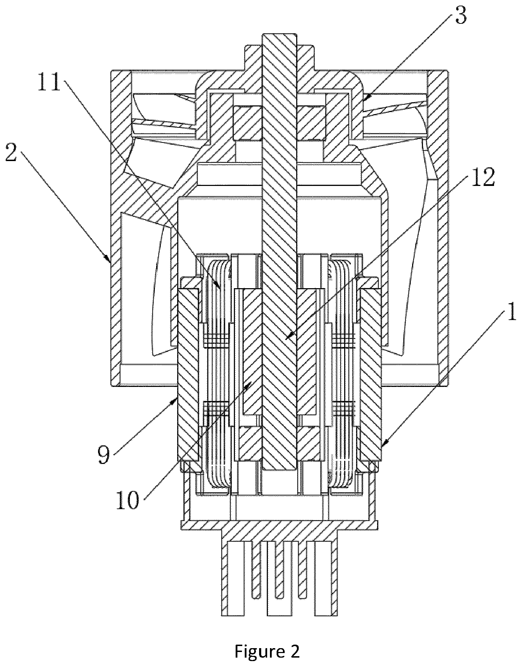

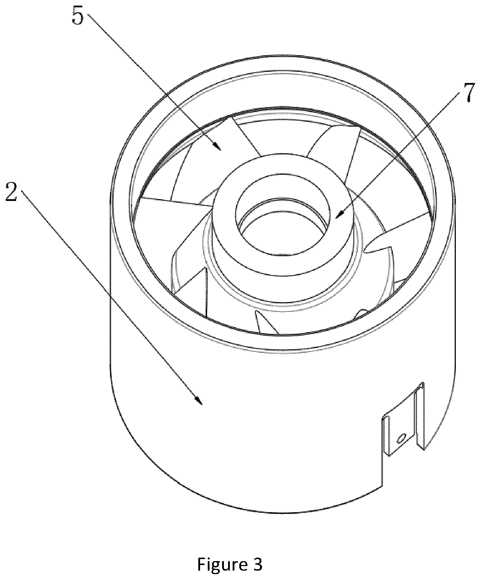

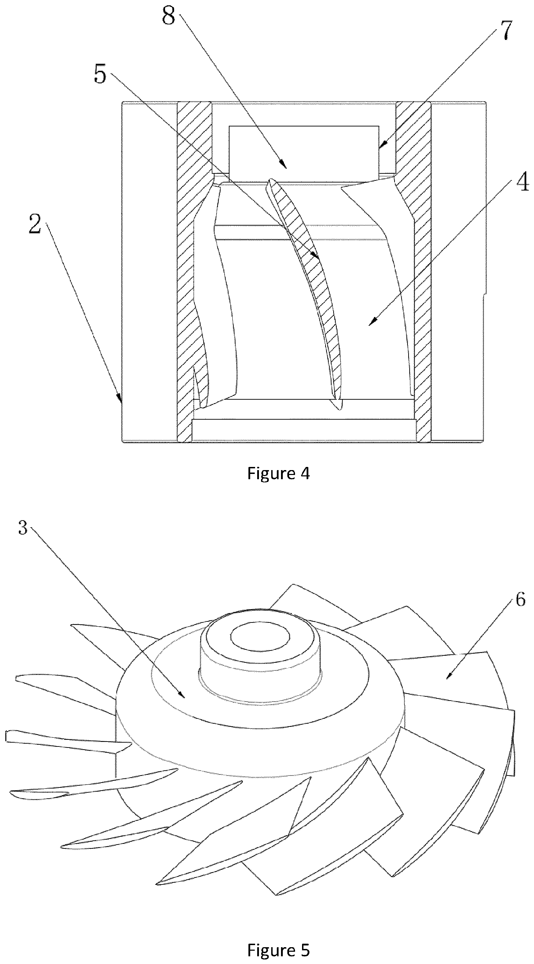

Hereinafter a clear and complete description will be given to the technical solutions in the embodiments of the present invention; apparently, the embodiments given here are only some of the embodiments of the present invention rather than all. Based on the embodiments provided here, all other embodiments obtained by those of ordinary skill in the art without spending creative effort fall in the protection scope of the present invention.
With reference to figures 1-5, in an embodiment of the present invention, a brushless motor of a high-speed air dryer, comprising a motor 1, an air channel 2 and a fan 3, the air channel 2 is vertically sleeved over an upper end portion of the motor 1, a top portion of the motor 1 penetrates a top portion of the air channel 2, the fan 3 is horizontally sleeved over the top portion of the air channel 2 and a bottom portion of the fan 3 is connected with the end portion of the motor 1;
An installation groove 4 is vertically formed in an intermediate portion of the air channel 2, a top portion of an outer surface of the installation groove 4 is curved, at least one air guiding piece 5 is formed circumferentially and at an even intervals at an inner surface of the fan 2, a side of the at least one air guiding piece 5 is connected with an inner surface of the air channel 2, another side of the at least one air guiding piece 5 is connected with the outer surface of the installation groove 4, the at least one air guiding piece 5 is formed to be arc-shaped, and the at least one air guiding piece 5 extends from the outer surface of the installation groove 4 to a bottom portion of the outer surface of the installation groove 4;
The fan 3 draws the air into the air channel 2, smoothness and resistance of the air flow when passing the air inlet to the air outlet is correlated to the shape, structure and inclination of the at least one air guiding piece 5, in the present invention, the configuration and structure in the air channel 2 has enhanced the smoothness of the air and reduced the resistance, in the meanwhile, sound generated when the air flow meets an obstacle is reduced, furthermore, by configuring the top portion of the outer surface of the installation groove 4 to be curved the beating sense of the fan blade is reduced and eliminated;

At least one fan blade 6 is formed at the outer surface of the fan 3, the at least one fan blade is formed to be arc-shaped, the at least one fan blade 6 extends from a top portion of the outer surface of the fan 3 to a bottom portion of the outer surface of the fan 3, thicknesses at both ends of the at least one fan blade 6 are thinner than a thickness of the at least one fan blade 6 at an intermediate portion, and differences between the fan blade in the present invention and the fan blades currently available are that: adjustment of the efficiency conversion region and ratio is primarily done by reducing an outer diameter of the at least one fan blade 6 and increasing the efficient length of the at least one fan blade 6, and with this design, the centrifugal force and vibration generated during high speed revolution of the fan blade is further reduced and the air flow rate is increased.

Preferably, a boss 7 is formed at the top portion of the installation groove 4, a through-hole 8 is vertically formed at an intermediate portion of the boss 7, the through-hole 8 extends through a top portion of the boss 7 and a bottom portion of the installation groove 4, and the motor 1 is sleeved in the installation groove 4.

Preferably, a bottom portion of the fan 3 is sleeved over the boss 7 and is rotatably connected with the boss 7.
Preferably, the motor 1 is formed by a stator 9, a rotor 10, at least one coil 10 and a rotation shaft 12;
At least one coil holder is formed circumferentially and at even intervals at an inner surface of the stator 9 and the at least one coil 11 is wound on the at least one coil holder;

The rotor is vertically provided on an inner surface of the at least one coil holder, the rotation shaft 12 is vertically sleeved over an intermediate portion of the rotor 10 and is connected with the rotor 10.

Preferably, a top portion of the rotation shaft 12 is connected to a bottom portion of the fan 3.

Here are experimental data:

| **High-speed air dryer test data** | | | |
|---|---|---|---|
| **The present invention** | | | |
| Noise (dB) | Air flow (L/s) | Flow rate (m/s) | Service time (H) |
| 72.9 | 43.2 | 49.2 | 1000 Max |
| 71.6 | 43.5 | 48.5 | 1000 Max |
| 72.2 | 43.1 | 49.5 | 1000 Max |
| 72.6 | 43.9 | 49.3 | 1000 Max |
| 71.8 | 43.8 | 48.8 | 1000 Max |

| **Similar prochannels** | | | |
|---|---|---|---|
| Noise (dB) | Air flow (L/s) | Flow rate (m/s) | Service time (H) |
| 75.6 | 40.1 | 47.2 | 600 Max |
| 75.2 | 39.2 | 47.9 | 600 Max |
| 75.6 | 38.6 | 46.4 | 600 Max |
| 76.0 | 39.8 | 47.9 | 600 Max |
| 75.1 | 39.6 | 47.4 | 600 Max |

Remarks: 1. the flow rate is the maximum flow rate directly measured at the air outlet;
2. The service time is the continuous running time; and
3. The foregoing data comparison is obtained by running the air dryers in the same conditions.

For those skilled in the art, apparently, the present invention is not limited to details of the foregoing exemplary embodiments, and without departing from the spirit and basic concept of the present invention, the present invention can be implemented in other specific forms. Therefore, no matter viewing from any perspective, the embodiments shall be taken as demonstrative and non-restrictive, the protection scope of the present invention is defined by the appended claims rather than the foregoing description, therefore, all changes that fall into the contents and scope of equivalents of the claims are covered in the present invention.

## Claims

1. A brushless motor for a high-speed hair dryer, comprising a motor, an air channel and a fan, the motor is vertically provided, the air channel is vertically sleeved over an upper end of the motor, a top portion of the motor penetrates a top portion of the air channel, the fan is sleeved over the top portion of the air channel and a bottom portion of the fan is connected with the top portion of the motor;
an installation groove is formed vertically in an intermediate portion of the air channel, a top portion of an outer surface of the installation groove is curved, at least one air guiding piece is formed circumferentially and at even intervals at an inner surface of the air channel, a side of the at least one air guiding piece is connected with the inner surface of the air channel, another side of the at least one air guiding piece is connected with the outer surface of the installation groove, the at least one air guiding piece is formed to be arc-shaped, and the at least one air guiding piece extends from the top portion of the outer surface of the installation groove to a bottom portion of the outer surface of the installation groove;
at least one fan blade is formed at an outer surface of the fan circumferentially and at even intervals, the at least one fan blade is formed to be arc-shaped, the at least one fan blade extends from a top portion of the outer surface of the fan to the bottom portion of the fan, and thicknesses at both ends of the at least one fan blade are thinner than a thickness of the at least one fan blade at an intermediate portion.

2. The brushless motor for a high-speed hair dryer according to claim 1, wherein a boss is formed at the top portion of the installation groove, a through-hole is formed vertically in an intermediate portion of the boss, the through-hole extends through a top portion of the boss and the bottom portion of the installation groove, and the motor is sleeved inside the installation groove.

3. The brushless motor for a high-speed hair dryer according to claim 1, wherein the fan is sleeved over the boss and is rotatably connected with the boss.

4. The brushless motor for a high-speed hair dryer according to claim 1, wherein the motor is formed by a stator, a rotor, at least one coil and a rotation shaft;
at least one coil holder is provided circumferentially and at even intervals at an inner surface of the stator and the rotation shaft is vertically sleeved over an intermediate portion of the rotor and is connected with the rotor.

5. The brushless motor for high speed hair dryer according to claim 1, wherein a top portion of the rotation shaft is connected with the bottom portion of the fan.
